# EUROPÄISCHE PATENTANMELDUNG

(11) **EP 2 105 675 A2**
(43) Veröffentlichungstag der Anmeldung: **30.09.2009**
(21) Anmeldenummer: 09003194.9
(22) Anmeldetag: 05.03.2009
(51) Int. Cl.: F24D 3/14

(54) **Flächentemperierungsaufbau**

(30) Priorität: 28.03.2008 DE 202008004383 U
(71) Anmelder: MERO-TSK International GmbH & Co. KG, 97084 Würzburg (DE)
(72) Erfinder: Knopp, Martin, 91483 Oberscheinfeld (DE)
(74) Vertreter: Schlögl, Markus

(57) **Zusammenfassung**

Die Erfindung betrifft einen Flächentemperierungsaufbau (1), umfassend eine Trägerschicht (2) mit zumindest einer von dessen Oberfläche (4) in die Trägerschicht (2) hinein reichenden Nut (3) zur Aufnahme einer Temperierungsleitung (5), wobei die Nut (3) mehrere direkt oder über Übergangsabschnitte (15) aufeinander folgende Nutabschnitte (6) mit zueinander versetzten und/oder abgewinkelten Nutachsen (7) aufweist, und wobei zum Halten der Temperierungsleitung (5) zumindest eine Seitenflanke (9) der Nut (3) zumindest an vorgegebenen Stellen in den Nutabschnitten (6) und/oder in den Übergangsabschnitten (15) zwischen aufeinander folgenden Nutabschnitten (6) zumindest abschnittsweise als Hinterschneidung (12) ausgebildet ist, derart dass sich die Nut (3) jeweils zumindest in einem Bereich zwischen Nutboden (8) und Nutöffnung (11) zur Nutöffnung (11) hin kontinuierlich verjüngt.

## Beschreibung

Die Erfindung betrifft einen Flächentemperierungsaufbau mit einer Trägerschicht zum Halten einer Temperierungsleitung.

Solche Flächentemperierungsaufbauten kommen beispielsweise bei Fußbodenheizungen zum Einsatz. Aus der DE 20 2005 002 322 U1 ist beispielsweise ein Bodenaufbau für Fußbodenheizungen bekannt, bei welchem eine als Verlegeplatte ausgebildete Trägerschicht eine U-förmig ausgebildete Nut aufweist, in welcher die Temperierungsleitung, im vorliegenden Fall beispielsweise eine Heizleitung, geführt werden kann. Zum Halten der Temperierungsleitung in der Nut sind zwei Möglichkeiten vorgeschlagen.

Einerseits wird vorgeschlagen, die Nut nach Einbringen der Temperierungsleitung in die Nut mit Spachtelmasse zu verfüllen. Zum besseren Halt der Spachtelmasse ist vorgesehen, dass die Nut in Nähe der Nutöffnung an sich gegenüberliegenden Seitenflanken Rillen aufweist, in welche die Spachtelmasse nach deren Aushärten eingreifen kann.

Andererseits wird vorgeschlagen, die Nutöffnung an vorgegebenen Stellen entlang der Nut zu verengen, so dass der Durchmesser der Nutöffnung etwas kleiner ist als der Durchmesser der Temperierungsleitung. In diesem Fall wird die Temperierungsleitung an den verengten Stellen in die Nuten eingedrückt, wobei durch Rastwirkung ein Halt der Temperierungsleitung in der Nut erreicht wird.

Ein Nachteil des bekannten Bodenaufbaus ist, dass die Temperierungsleitungen durch Eindrücken in die Nut an den verengten Stellen beschädigt werden können. Ferner kann nicht sichergestellt werden, dass die Temperierungsleitungen auf den Nutboden gedrückt werden, was bei Verfüllung mit Spachtelmasse zu Hohlräumen unter der Temperierungsleitung führen kann. Die Hohlräume wiederum können bei hoher punktueller Belastung der Spachtelmasse, z. B. durch Stuhlrollenbelastungen, einbrechen, was zu Schäden an der Temperierungsleitung führen kann. Des Weiteren ist es erforderlich, dass die Nut mit hoher Maßgenauigkeit, d. h. geringen Toleranzen, hergestellt wird, damit ein zuverlässiger Halt der Temperierungsleitung sichergestellt werden kann. Das ist aufwändig, kosten- und arbeitsintensiv. Insbesondere mechanische Abnutzungen an Fräsern, welche z. B. zur Herstellung der Nuten verwendet werden, führen zu einer stetigen Verringerung des Nutdurchmessers, wodurch ein Einbringen der Temperierungsleitung in die Nut maßgeblich beeinträchtigt werden kann, und die Wahrscheinlichkeit zur Beschädigung der Temperierungsleitung zunimmt. Ein Austausch von abgenutzten Fräsern und deren Wiederaufbereitung ist aufwändig und kostenintensiv.

Ausgehend davon liegt der vorliegenden Erfindung die Aufgabe zugrunde, einen Flächentemperierungsaufbau bereitzustellen, mit welchem die Nachteile nach dem Stand der Technik vermieden werden können. Insbesondere soll ein Flächentemperierungsaufbau bereitgestellt werden, mit welchem ein besonders einfacher und sicherer Halt der Temperierungsleitung möglich ist. Unter analoger Aufgabenstellung soll ferner ein Bauelement mit Flächentemperierungsaufbau bereit gestellt werden.

Diese Aufgabe wird gelöst durch die Merkmale der Ansprüche 1 und 18. Ausgestaltungen der Erfindung ergeben sich aus den Ansprüchen 2 bis 17.

Gemäß einem ersten Aspekt der Erfindung ist ein Flächentemperierungsaufbau (oder: Flächenklimatisierungsaufbau, Flächentemperierungseinrichtung) vorgesehen, welcher eine Trägerschicht mit einer von dessen Oberfläche in die Trägerschicht hinein reichenden Nut aufweist. Die Nut dient zur Aufnahme einer Temperierungsleitung (alternative Bezeichnung: Temperaturmedienleitung oder Temperiermedienleitung, beispielsweise eine Heizmedien- und/oder Kühlmedienleitung) und weist mehrere direkt oder über Übergangsabschnitte aufeinander folgende Nutabschnitte mit zueinander versetzten und/oder abgewinkelten Nutachsen auf.

Der Begriff Temperierung wird hierbei insbesondere derart umfassend verstanden, dass von der Flächentemperierung eine Heiz- oder Kühlwirkung ausgehen kann. Die Erfindung umfasst somit neben einem Flächenerwärmungsaufbau auch einen Flächenkühlungsaufbau sowie auch einen Aufbau, der sowohl eine Erwärmung als auch eine Kühlung bewirken kann, je nach eingesetztem Temperiermedium. Dementsprechend kann es sich bei der Temperierungsleitung um eine Heiz- und/oder Kühlmedienleitung handeln.

Gemäß einer bevorzugten Ausbildung ist zum Halten der Temperierungsleitung zumindest eine Seitenflanke der Nut zumindest an vorgegebenen Stellen in den Nutabschnitten und/oder in den Übergangsabschnitten zwischen aufeinander folgenden Nutabschnitten zumindest abschnittsweise als Hinterschneidung ausgebildet. Dabei ist die Hinterschneidung derart ausgebildet, dass sich die Nut jeweils zumindest in einem Bereich zwischen Nutboden und Nutöffnung oder Nuthals zur Nutöffnung oder zum Nuthals hin kontinuierlich verjüngt.

Die Temperierungsleitungen sind in der Regel elastisch bzw. biegsam ausgebildet. Durch den Versatz der Nutachsen bzw. durch die zueinander abgewinkelten Nutachsen wird bewirkt, dass die Temperierungsleitung nach Einbringen in die Nut durch die Hinterschneidung/en sicher gehalten wird. Bei gekrümmtem Verlauf der Temperierungsleitung in der Nut wird die Temperierungsleitung durch ihre eigene Elastizität, in einer Richtung parallel zur Trägerschicht an Seitenflanken der Nut gedrückt. Da sich die Nut zur Nutöffnung hin verjüngt, wird die Temperierungsleitung in Richtung des Nutbodens gedrückt. Dadurch kann bereits ohne Verfüllung der Nut mit Spachtelmasse und dgl. ein sicherer Halt der Temperierungsleitung in der Nut sichergestellt werden. Ferner ist es im Gegensatz zum Stand der Technik auch nicht erforderlich, dass an der Nutöffnung zusätzliche Mittel zum klemmenden Halten der Temperierungsleitung angebracht sind. Es können also durch Klemmen und dgl. verursachte Beschädigungen der Temperierungsleitung beim Einsetzen in die Nut vermieden werden.

Werden die Seitenflanken zumindest an denjenigen Stellen hinterschnitten, an welchen die Temperierungsleitung infolge ihrer Elastizität an die Seitenflanke gedrückt wird, kann eine besonders vorteilhafte und einfache Halterung der Temperierungsleitung ohne weitere Sicherungsmaßnahmen sichergestellt werden.

Bei geeigneter Ausbildung der Hinterschneidung kann sogar erreicht werden, dass die Temperierungsleitung stets auf den Nutboden gedrückt wird, so dass ein Aufschwemmen der Temperierungsleitung bei Verfüllen der Nut mit einem Füllmaterial vermieden wird. Damit wird der Entstehung von Hohlräumen unter der Temperierungsleitung entgegengewirkt.

Der Flächentemperierungsaufbau kann Bestandteil einer in einen Fußboden, eine Wand und/oder eine Decke eines Bauwerks integrierten Flächentemperierung sein. Unter Temperierung wird dabei insbesondere verstanden, dass von der Flächentemperierung eine Heiz- oder Kühlwirkung ausgehen kann. Insoweit kann der Flächentemperierungsaufbau insbesondere Bestanteil einer Fußboden-, Wand- oder Deckenheizung sein. Je nach Verwendungszweck kann durch die Temperierungsleitung ein - verglichen mit der Umgebungstemperatur - wärmeres oder kälteres Temperaturmedium (oder: Temperiermedium, Wärmeträger, beispielsweise ein Heiz- und/oder Kühlmedium) geführt oder gepumpt werden. Der Flächentemperierungsaufbau eignet sich gleichermaßen für alle Boden-, Wand- und Deckenarten, insbesondere für Hohl- oder Doppelböden, -wände oder -decken.

Zur Stabilisierung und zum Schutz der Temperierungsleitung kann ein von der Temperierungsleitung nicht vereinnahmtes Volumen der Nut mit einem aushärtbaren Füllmaterial verfüllt sein. Damit eine weitgehend vollständige Füllung mit dem Füllmaterial erreicht werden kann, ist es von Vorteil, wenn das Füllmaterial fließfähig ist.

Mit der erfindungsgemäß ausgebildeten Nut kann erreicht werden, dass die Temperierungsleitung stets auf den Nutboden gedrückt wird. Demzufolge kann vermieden werden, dass sich nach dem Aushärten der Füllmasse Hohlräume ausbilden, welche der punktuellen Belastbarkeit abträglich sind. Unter Umständen ist zur Verfüllung der Nut auch ein entsprechend feinkörniges, vorzugsweise aushärtbares, Trockenfüllmaterial geeignet.

Von besonderem Vorteil ist es, dass durch die sich zur Nutöffnung hin kontinuierlich verjüngende Nut die Temperierungsleitung im Wesentlichen unabhängig von dessen Durchmesser gleichermaßen in Richtung Nutboden gedrückt wird. Das hat insbesondere den Vorteil, dass zumindest die Breite der Nutöffnung größer sein kann als der Durchmesser der Temperierungsleitung. Die Nut kann daher mit vergleichsweise weiten Toleranzen hinsichtlich der Bemaßung der Nut hergestellt werden. Mechanische Abnutzungen an Fräswerkzeugen bei spanender Herstellung der Nut, was bei Systemen nach dem Stand der Technik zu Komplikationen führen kann, sind daher weit weniger gravierend.

Bei den erfindungsgemäß ausgebildeten Nuten ist es sogar möglich, dass - innerhalb gewisser Grenzen - dieselbe Nutform für Temperierungsleitungen mit unterschiedlichem Durchmesser gleichermaßen geeignet ist.

Besonders bei spanender Herstellung der Nut mit einem Fräswerkzeug ist es von Vorteil, wenn beide Seitenflanken der Nut als Hinterschneidungen derart ausgebildet sind, dass sich die Nut zumindest in einem Bereich zwischen Nutboden und Nutöffnung in Richtung vom Nutboden zur Nutöffnung hin beidseitig kontinuierlich verjüngt. In diesem Fall kann die Nut mit einem einzigen Fräswerkzeug, z. B. mit einem Schaftfräser, und in einem Arbeitsgang hergestellt werden.

Hinsichtlich der konkreten Form der Nut, d. h. insbesondere hinsichtlich der zueinander versetzten und/oder abgewinkelten Nutachsen, gibt es mehrere im Wesentlichen gleichermaßen geeignete Formen. Beispielsweise kommen Ausgestaltungen in Betracht, bei welchen der Nutverlauf in einer Ebene parallel zur Trägerschicht sägezahnartig, wellenartig, mäanderartig und/oder zackenlinienartig ausgebildet ist. Für die Herstellung der Nuten mit einem Fräsverfahren eignen sich besonders wellenartige oder mäanderartige Nutverläufe, da solche Formen mit einem vergleichsweise niedrigen Aufwand in der Trägerschicht geformt werden können. Mit wellenartig bzw. mäanderartig gerundeten Formen können Querkanten in der Nut vermieden werden. Solche Querkanten können bei Andrücken der Temperierungsleitung an die Seitenflanken Beschädigungen, wie z. B. Knickungen, hervorrufen.

Wenn die Nut mittels eines Fräsverfahrens und in einem Arbeitsgang hergestellt wird, werden beide Seitenflanken der Nut in der Regel entsprechend der erfindungsgemäßen Hinterschneidung ausgebildet sein. Es ist jedoch auch möglich, dass die Seitenflanken lediglich an denjenigen Abschnitten eine Hinterschneidung aufweisen, an welchen ein Verlauf der Seitenflanke bezüglich der Nutachse einen negativen Krümmungsradius bzw. negative Krümmungsradien aufweist. An solchen Stellen wird eine in die Nut eingelegte flexible Temperierungsleitung durch deren Elastizität in der Regel in Richtung Hinterschneidung gedrückt, wobei durch die spezielle Struktur der Hinterschneidung wiederum bewirkt wird, dass die Temperierungsleitung in Richtung Nutboden gedrückt wird.

Die Grobgeometrie der Nut oder zumindest eines größeren zusammenhängenden Abschnitts der Nut kann verschiedenartige Ausprägungen aufweisen. Dabei wird unter Grobgeometrie der Verlauf der Nut ungeachtet der feingeometrischen Form der Nutabschnitte und Übergangsbereiche verstanden. Beispielsweise kann sich die Nut im Wesentlichen linear über die Trägerschicht erstrecken. In Frage kommen auch spiralartige Formen, und Formen mit einer oder mehreren Buchten bzw. Schleifen. Bei Ausgestaltungen mit linearer Grobgeometrie oder bei einer Grobgeometrie mit Buchten oder Schleifen kann die Nut in deren Längserstreckung mehrere, vorzugsweise parallel zueinander verlaufende, erste Nutbereiche aufweisen, in welchen jeweils mehrere Nutabschnitte und Übergangsabschnitte ausgebildet sind. Zur Ausbildung von Buchten bzw. Schleifen können diese ersten Nutbereiche durch gekrümmte zweite Nutbereiche miteinander verbunden sein. Ausgehend davon wird deutlich, dass die Grobgeometrie der Nut unter Aufrechterhaltung der vorteilhaften Wirkungen in weiten Grenzen variiert, und an jeweilige Erfordernisse, wie z. B. gewünschte Flächendichte der Temperierungsleitungen, angepasst werden kann.

Die Trägerschicht kann aus einem beliebigen, zum Aufbau einer Trägerschicht für Boden-, Wand- oder Deckentemperierungsaufbauten geeigneten Material hergestellt sein. Insbesondere eignen sich aushärtbare Baustoffe, wie Beton, Estrich und dergleichen. Es kommen auch Materialien wie Gips, insbesondere Gips-Faser-Gemische, Anhydrit, Holz, insbesondere Vollholz, Spanholz, Faserholz, Schichtholz, sowie Kunststoffe und/oder Hartschaum in Betracht. Dabei kann die Trägerschicht eine oder mehrere aneinandergefügte oder zusammengefügte Trägerschichtplatten umfassen.

Ein zweiter Aspekt der Erfindung betrifft ein Bauelement, insbesondere ein Fertigbauelement, umfassend ein Boden,- Wand- oder Deckenbauelement mit einem Flächentemperierungsaufbau nach dem ersten Aspekt der Erfindung. Vorteile und vorteilhafte Wirkungen für den zweiten Aspekt der Erfindung ergeben sich aus den Vorteilen und vorteilhaften Wirkungen zum ersten Aspekt der Erfindung. Insbesondere kann erreicht werden, dass die Temperierungsleitung ohne weitere Maßnahmen sicher in der Nut gehalten wird. Diese Wirkung kann unter Berücksichtigung von Höhe und maximaler Breite der Nut gleichermaßen für Temperierungsleitungen unterschiedlichen Durchmessers erreicht werden. Die erfindungsgemäß vorgeschlagene Nut ist ferner tolerant gegenüber Nutversätzen am Übergang zwischen aneinander grenzenden Fertigbauelementen. Insoweit verringert sich der Positionierungsaufwand, wenn der Flächentemperierungsaufbau aus einzelnen Trägerplatten zusammengesetzt wird.

Die Erfindung wird nachstehend anhand der Beschreibung von Ausführungsbeispielen und unter Bezugnahme auf die beiliegenden Zeichnungen näher erläutert. Es zeigen:
- FIG 1: eine Aufsicht auf einen Fußbodenheizungsaufbau als Beispiel eines erfindungsgemäßen Flächentemperierungsaufbaus,
- FIG 2: einen Querschnitt durch den Fußbodenheizungsaufbau der FIG 1,
- FIG 3: eine Aufsicht auf einen vergrößerten Abschnitt einer Nut des Fußbodenheizungsaufbaus der FIG 1,
- FIG 4A, 4B: weitere Querschnitte des Fußbodenheizungsaufbaus, und
- FIG 5: eine Aufsicht auf eine Variante des Fußbodenheizungsaufbaus.

Gleiche oder funktionsgleiche Elemente sind in den Figuren mit gleichen Bezugszeichen bezeichnet. Im Folgenden wird die Erfindung anhand eines Fußbodenheizungsaufbaus erläutert. Es wird bemerkt, dass die folgende Beschreibung ohne Weiteres auf andere Flächentemperierungsaufbauten übertragen werden kann, wie beispielsweise Wand- oder Deckentemperierungsaufbauten, insbesondere Wand- oder Deckenheizungsaufbauten.

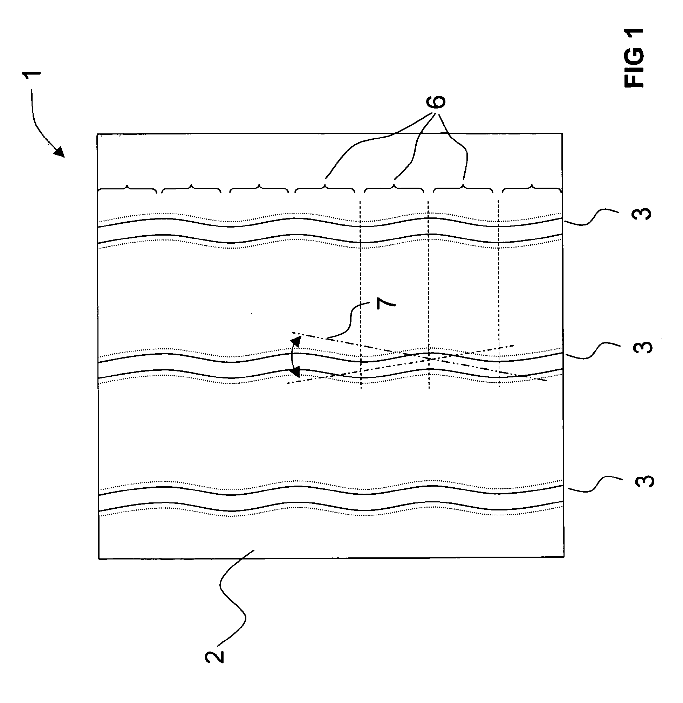

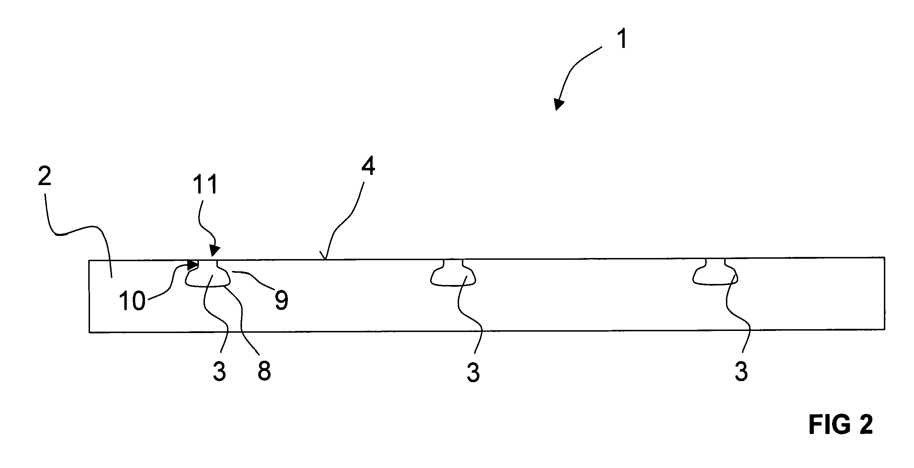

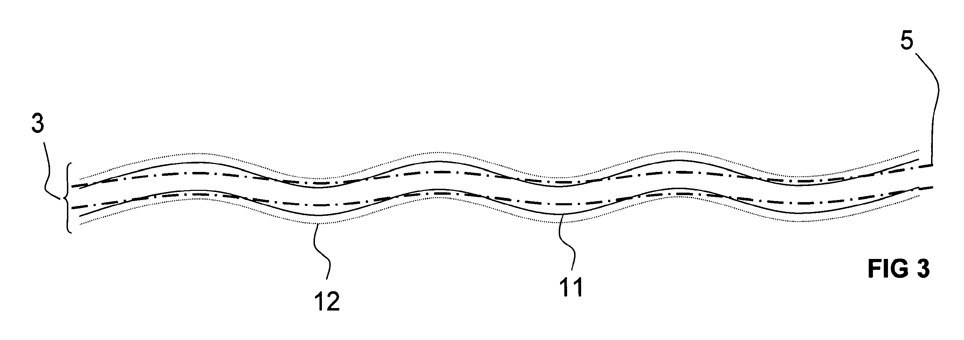

FIG 1 zeigt eine Aufsicht auf einen Fußbodenheizungsaufbau 1. Der Fußbodenheizungsaufbau 1 umfasst eine Trägerschicht 2 welche im vorliegenden Ausführungsbeispiel insgesamt drei Nuten 3 aufweist. Jede Nut 3 erstreckt sich von der in Aufsicht dargestellten Oberfläche 4 der Trägerschicht 2 in die Trägerschicht hinein, was in der Querschnittsdarstellung der FIG 2 entnommen werden kann. Die Nuten 3 sind dazu vorgesehen und derart ausgebildet, dass diese eine Temperierungsleitung 5, beispielsweise eine Heizleitung, aufnehmen können, was in einer vergrößerten Darstellung einer Nut 3 in FIG 3 im Detail gezeigt ist. Eine in die Nut 3 eingelegte Temperierungsleitung 5 ist mit strichpunktierten Linien dargestellt. Der dargestellte Leitungsverlauf ist hierbei rein beispielhaft, die Temperierungsleitung 5 kann auch gerade oder zumindest nahezu gerade verlaufen, dies ist jedoch nicht zwingend. Ein geringer Achsversatz, beispielsweise um ca. 2 mm, kann sich als vorteilhaft erweisen, da sich dadurch aufgrund des Andruckes an die Nutwände ein besserer Halt ergeben kann.

Jede Nut 3 weist, in Aufsicht betrachtet, einen wellen- bzw. mäanderartigen Verlauf auf, was aus FIG 1 deutlich wird. In Längserstreckung der Nut 3 weist diese, bedingt durch den wellen- oder mäanderartigen Verlauf, mehrere hintereinander gelegene Nutabschnitte 6 mit zueinander abgewinkelten Nutachsen 7 auf.

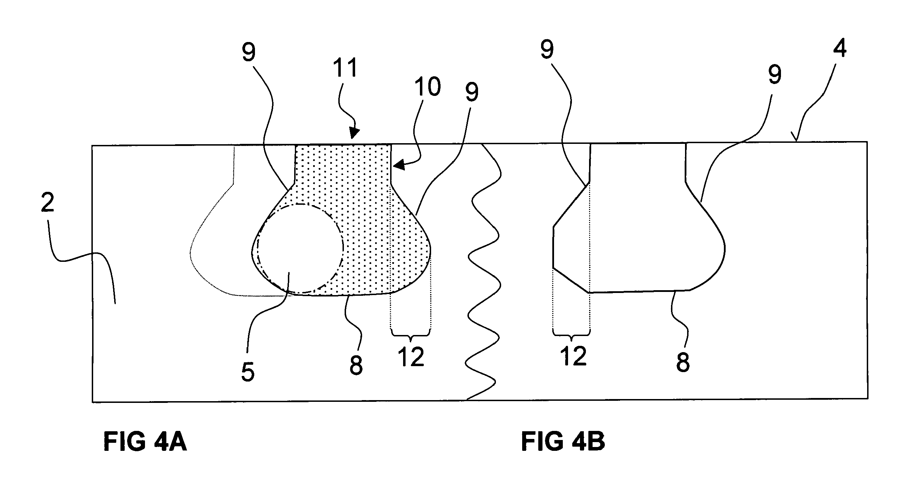

Aus FIG 2 in Zusammenschau mit FIG 4A werden Details der Querschnittsform der Nut 3 deutlich. In der Ausführungsform der FIG 2 und FIG 4A weist die Nut 3 einen birnenartigen Querschnitt auf. Die Nut 3 umfasst einen Nutboden 8, sich daran anschließende Seitenflanken 9, welche am oberen Ende der Nut 3 in einen Nuthals 10 münden, und eine am Ende des Nuthalses 10 an der Oberfläche 4 gelegene Nutöffnung 11. Im Bereich des Nuthalses 10 erstrecken sich die Seitenflanken 9 vertikal nach unten und sind daran anschließend als Hinterschneidung 12 ausgebildet. Die Hinterschneidung 12 weist an den Nutboden 8 anschließend einen kreisbogenartig gekrümmten Abschnitt auf, welcher eine Art Ausbauchung bildet. Die Ausbauchung geht in einen schräg nach oben verlaufenden, sich zum Nuthals 10 hin kontinuierlich verjüngenden Abschnitt über.

Die Seitenflanken 9 sind also abschnittsweise als Hinterschneidung 12 ausgebildet, derart dass sich die Nut 3 in einem Bereich zwischen Nutboden 8 und Nutöffnung 11 in Richtung zum Nuthals 10 bzw. zur Nutöffnung 11 hin kontinuierlich verjüngt.

Mittels der auf diese Weise ausgebildeten Nut 3 kann die Temperierungsleitung 5 sicher und ohne weitere Vorkehrungen in der Nut gehalten werden, was im Folgenden anhand von FIG 3, FIG 4A und FIG 4B näher erläutert wird:

FIG 3 zeigt einen vergrößerten Abschnitt der Nut 3, in welche die flexibel ausgebildete Temperierungsleitung 5 eingelegt ist. Die Nutöffnung 11 ist mittels durchgehenden Linien dargestellt, während die Hinterschneidungen 12 durch punktierte Linien angedeutet sind. Durch den wellenartigen Verlauf der Nut 3 wird bewirkt, dass die Temperierungsleitung 5 durch von ihr selbst erzeugte rückstellende Elastizitätskräfte in gewissen Abschnitten der Nut 3 in Richtung der Seitenflanken 9 gedrückt wird. Durch die sich zum Nuthals 10 hin kontinuierlich verjüngende Hinterschneidung 12 wird erreicht, dass die Temperierungsleitung 5, wiederum durch die Elastizitätskräfte, in Richtung Nutboden 8 gedrückt wird. Die Temperierungsleitung 5 wird also in die Hinterschneidung 12 und in Richtung Nutboden 8 gedrückt, was aus FIG 4A deutlich wird.

Die Lage der Abschnitte, in welchen die Temperierungsleitung 5 an die Seitenflanken 9 gedrückt wird, hängt unter anderem vom jeweiligen Verlauf der Nut 3 ab. Im vorliegenden Ausführungsbeispiel weisen diese Abschnitte bezüglich der jeweiligen lokalen Nutachsen 7 einen negativen Krümmungsradius auf, sind also bezüglich der jeweiligen lokalen Nutachsen 7 konkav gekrümmt. Ausgehend davon sei erwähnt, dass es im Prinzip genügen würde, wenn die Hinterschneidungen 12 lediglich an diesen konkaven Abschnitten ausgebildet wären.

In FIG 4B ist beispielhaft eine alternative Form der Hinterschneidung 12 gezeigt. Die Hinterschneidung 12 der rechten Seitenflanke 9 entspricht der Form der mit Bezug zu FIG 2 und FIG 4A beschriebenen gerundeten Hinterschneidung 12. Demgegenüber ist die Hinterschneidung 12 der linken Seitenflanke 9 eckig ausgebildet. Aus der Gegenüberstellung in FIG 4B wird deutlich, dass die alternative Form gleichermaßen geeignet ist und die gleichen vorteilhaften Wirkungen erreicht werden können. Gleiche Wirkungen können auch mit anderen Nutquerschnitten erreicht werden, welche in ihrer Geometrie hinsichtlich der vorstehend beschriebenen Nutfunktionalität ausgebildet sind. Beispielhaft seien schwalbenschwanzartige oder flaschenartige Nutquerschnitte erwähnt. Auch kommt ein Nutquerschnitt mit trichterförmigem oder kegelstumpfförmigem Hinterschnitt in Betracht, wobei die große Trichteröffnung bzw. die große Kegelstumpfgrundfläche direkt am Nutboden enden kann oder auch mit Abstand zum Nutboden. Im letzteren Fall kann der verbleibende Abstand zwischen dem trichter- bzw. kegelstumpfförmigen Verlauf und dem Nutboden beispielsweise durch eine senkrechte Wand überbrückt sein.

Dadurch, dass die Temperierungsleitung 5 ohne weitere Maßnahmen sicher in der Nut gehalten wird, kann die Breite der Nutöffnung 11 größer gewählt werden als der Durchmesser der Temperierungsleitung 5. Auf diese Weise kann ein besonders einfaches Einlegen der Temperierungsleitung 5 in die Nut 3 gewährleistet werden, wobei in vorteilhafter Weise zudem vermieden werden kann, dass die Temperierungsleitung 5 beim Einsetzen in die Nut 3 beschädigt wird. Letzteres kann beispielsweise bei Nuten nach dem Stand der Technik auftreten, bei welchen zum Zwecke der Halterung der Temperierungsleitung 5 in der Nut 3 die Breite der Nutöffnung an vorgegebenen Stellen verengt ist bzw. kleiner ausgebildet ist als der Durchmesser der Temperierungsleitung.

Wie in FIG 4A dargestellt, ist das von der Temperierungsleitung 5 nicht vereinnahmte Volumen der Nut 3 mit einem aushärtbaren Füllmaterial, z. B. einer Spachtelmasse und dgl., verfüllt. Bei dem Füllmaterial kann es sich allgemein um organische oder anorganische Werkstoffe handeln, auch um organisch und anorganisch gebundene Kompositwerkstoffe. Das Füllmaterial wirkt stabilisierend, gibt zusätzlichen Halt für die Temperierungsleitung 5 und dient zugleich als Schutz für die Temperierungsleitung 5 gegenüber äußeren Einwirkungen. Ferner ermöglicht das Füllmaterial einen besseren Wärmeübergang.

Die in FIG 1 dargestellten Nuten 3 erstrecken sich zwischen einander gegenüberliegenden Seiten der Trägerschicht 2, wobei die Grobgeometrie jeder Nut 3 im Wesentlichen linear ist. Die Grobgeometrie soll dabei verstanden werden als der Verlauf der Nut 3 ungeachtet der feingeometrischen, im vorliegenden Fall wellenartigen Form. Andere Grobgeometrien sind denkbar. Beispielsweise könnte die Grobgeometrie, zumindest abschnittsweise, durch einen spiralartigen Verlauf oder durch Buchten oder Schleifen gegeben sein. Die Grobgeometrie kann beispielsweise auch Abschnitte mit sinus- bzw. cosinusförmigen Kurvenformen aufweisen oder Abschnitte mit Kurvenformen nach Art eines Splines. Diese Kurvenformen ermöglichen ein recht einfaches Einlegen der Temperierungsleitung 5.

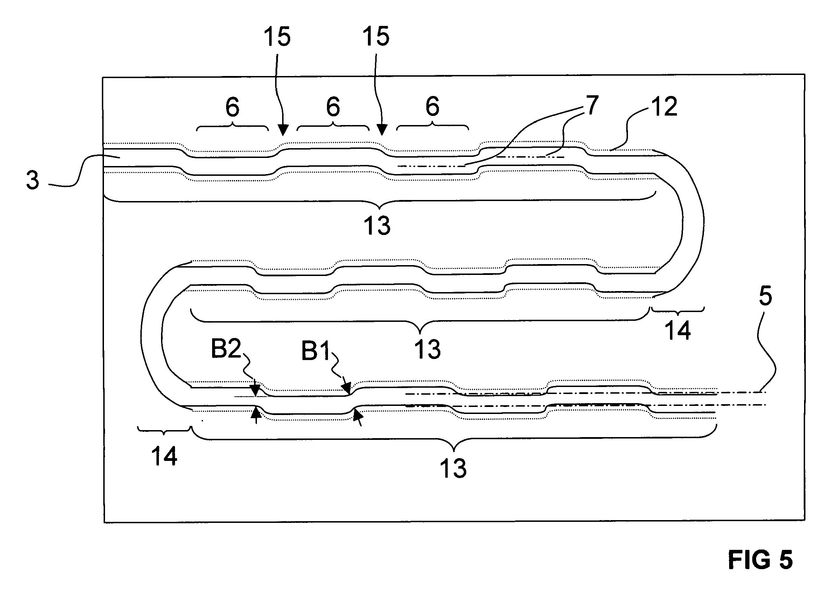

Eine Grobgeometrie mit Buchten ist in einer Variante für den Fußbodenheizungsaufbau in FIG 5 dargestellt. Die in FIG 5 dargestellte Nut 3 weist in dessen Längserstreckung insgesamt drei, im Wesentlichen parallel zueinander verlaufende erste Nutbereiche 13 mit linearer Grobgeometrie auf. Diese ersten Nutbereiche 13 sind durch gekrümmte zweite Nutbereiche 14 miteinander verbunden, so dass sich die insgesamt schleifen- bzw. buchtenartige Grobgeometrie der Nut 3 ergibt. Die Anzahl der Buchten kann von der Darstellung in FIG 5 abweichen und entsprechend den jeweiligen Erfordernissen, wie z. B. Temperierungs- bzw. Heizleitungsflächendichte, gewählt werden. Besonders geeignet sind Grobgeometrien, bei denen der Übergang von einem gekrümmten Nutbereich in einen linearen Nutbereich tangential ausgebildet ist, d.h. der lineare Nutbereich liegt vergleichbar einer Tangente am Kreisradius des gekrümmten Nutbereichs im Übergangsbereich an.

In den ersten Nutbereichen 13 sind, analog zu FIG 1, jeweils mehrere hintereinander gelegene Nutabschnitte 6 angeordnet, die durch Übergangsabschnitte 15 miteinander verbunden sind. Die Nutabschnitte 6 der FIG 5 weisen im Unterschied zu FIG 1 nicht zueinander abgewinkelte, sondern bezüglich der Längserstreckung der Nut 3 zueinander versetzte Nutachsen 7 auf. Wie durch strichpunktierte Linien angedeutet ist, weisen die Seitenflanken 9 der Nut 3 zumindest in den ersten Nutbereichen 13 Hinterschneidungen 12 auf, die entsprechend den obigen Ausführungen ausgebildet sind.

Bei der vorliegenden Variante kann durch den Versatz der Nutachsen 7 ein sicherer Halt der Temperierungsleitung in der Nut 3 gewährleistet werden. Dabei ist es bei geeigneter Ausgestaltung des Nutquerschnitts möglich, dass der gleiche Effekt erzielt wird wie bei den abgewinkelten Nutachsen 7 der FIG 1, d. h. dass eine in die Nut eingebrachte Temperierungsleitung 5 auf Grund ihrer Elastizität an entsprechenden Stellen in die Hinterschneidungen 12 und in Richtung Nutboden 8 gedrückt, und dadurch ohne weitere Maßnahmen sicher in der Nut 3 gehalten wird. Ferner ist es bei der vorliegenden Variante - im Übrigen auch bei der Variante nach FIG 1 und FIG 3 - möglich, die Breite der Nutöffnung 11 und die Tiefe der Hinterschneidung 12 so zu wählen, dass sich allein aus der Geometrie der Nut 3 ein sicherer Halt der Temperierungsleitung 5 ergibt. Das ist beispielhaft an dem in FIG 5 unten liegenden ersten Nutbereich 13 veranschaulicht. Der Versatz der Nutachsen 7, korrespondierend zu abgewinkelten Nutachsen 7 in FIG 1, führt dazu, dass eine zum Einbringen der Temperierungsleitung 5 in die Nut 3 verfügbare erste Öffnungsbreite B1 größer ist als eine über die gesamte Länge des ersten Nutbereichs 13 verfügbare zweite Öffnungsbreite B2. Ist nun die erste Öffnungsbreite B1 größer und die zweite Öffnungsbreite B2 kleiner als der Durchmesser der Temperierungsleitung 5, so kann dadurch erreicht werden, dass die der linearen Grobgeometrie des ersten Nutbereichs 13 folgende Temperierungsleitung 5 nicht aus der Nut 3 heraustreten kann. Hierbei soll bemerkt werden, dass auch hier eine durch die Elastizität der Temperierungsleitung 5 in Richtung des Nutbodens 8 gerichtete Kraftwirkung bei geeigneter Ausgestaltung der Nut 3 erreicht werden kann. Durch solche Kraftwirkungen kann, wie bereits erwähnt, vermieden werden, dass die Temperierungsleitung 5 bei Verfüllen der Nut 3 mit Füllmaterial aufschwemmt und sich Hohlräume unter der Temperierungsleitung 5 ausbilden.

Es wird darauf hingewiesen, dass auch Mischformen der beiden dargestellten Varianten, d. h. Mischformen von versetzten und abgewinkelten Nutachsen 7 im Rahmen der Erfindung liegen.

Mit Bezug zu FIG 4A wird nun noch genauer auf die Nut 3 und deren Form eingegangen. Schon hier soll bemerkt werden dass sich die nachfolgend beschriebene Querschnittsgeometrie der Nut 3 für Temperierungsleitungen 5 mit unterschiedlichen Durchmessern, beispielsweise im Bereich von 10 mm bis 20 mm, insbesondere 14 mm bis 17 mm, gleichermaßen eignet. Das liegt unter anderem an der erfindungsgemäßen Kombination von Feingeometrie, d. h. abgewinkelten und/oder versetzten Nutachsen 7, und spezieller Form der Hinterschneidung 12.

Für Durchmesser der Temperierungsleitung 5 im Bereich von 10 mm bis 20 mm, insbesondere 14 mm bis 17 mm, kann die Nut 3 beispielsweise eine Tiefe von ca. 25 mm aufweisen, und die Breite der Nutöffnung 11 kann ca. 19 mm betragen. Für den Fall, dass beide Seitenflanken 9 eine Hinterschneidung 12 aufweisen, kann eine im Bereich der Hinterschneidung 12 gelegene maximale Breite etwa 29 mm betragen. Dabei kann der in FIG 4A gekrümmt ausgebildete Übergang zwischen Nutboden 8 und dem sich verjüngenden Abschnitt der Hinterschneidung 12 einen Krümmungsradius von etwa 7 mm aufweisen; und ein Übergang zwischen dem sich verjüngenden Abschnitt und dem Nuthals 10 kann einen Krümmungsradius von ungefähr 1 mm aufweisen. Der sich verjüngende Abschnitt der Hinterschneidung 12 kann mit der Öffnungsebene der Nut 3 einen Winkel von ca. 55 Grad einschließen. Wie bereits erwähnt, eignet sich eine gemäß der vorstehend angegebenen Bemaßung ausgebildete Nut 3 gleichermaßen für Temperierungsleitungen 5 mit Durchmessern im Bereich von 14 mm bis 17 mm. Die Herstellung der Nut 3 ist daher weniger strengen Anforderungen hinsichtlich Bemaßungstoleranzen unterworfen. Das vereinfacht die Herstellung und führt darüber hinaus zu einer Kostenreduktion bei der Herstellung der Nut 3.

Für die Herstellung der Nut 3 gibt es mehrere Möglichkeiten, welche unter anderem von dem Material abhängig sind, aus welchem die Trägerschicht 2 hergestellt ist. Als Materialien kommen alle zur Herstellung eines Boden-, Wand- oder Deckenbauelements geeigneten Baustoffe in Betracht, insbesondere Stoffe mit einer guten Wärmeleitfähigkeit, beispielsweise: aushärtbare Baustoffe, wie Beton und Estrich, Gips, insbesondere Gips-Faser-Gemische, Anhydrit, Holz, insbesondere Vollholz, Spanholz, Faserholz, Schichtholz, sowie Kunststoff und/oder Hartschaum.

Die Nut 3 kann einhergehend mit der Herstellung des Boden-, Wand- oder Deckenbauelements geformt werden. Auf diese Weise können Fertigbauelemente, z. B. Verlegeplatten und dgl., bereitgestellt werden, welche Baustellenseitig verlegt und vergleichsweise zügig mit Temperierungsleitungen 5 bestückt werden können.

Es ist aber auch möglich, dass die Nuten 3 baustellenseitig nach Herstellung der Trägerschicht 2 geformt werden. Dabei kann die Trägerschicht 2 beispielsweise durch kachelartiges Aneinanderfügen von Trägerplatten aufgebaut werden. Die Nuten 3 können entweder nach Aufbau der gesamten Trägerschicht 2, d. h. nach Verlegen aller erforderlichen Trägerplatten, oder sukzessive für einzelne oder mehrere Trägerplatten beim Aufbau der Trägerschicht 2 geformt werden. Es ist auch möglich, die Erfindung in alten Estrichen zu verwirklichen, durch Einbringung der entsprechenden Nuten in die alten Estriche.

Nicht nur für die baustellenseitige Formung der Nuten 3 eignen sich insbesondere Fräsverfahren, bei welchen die Nuten 3 mit einer nach Art einer Oberfräse ausgebildeten Fräseinrichtung in die Trägerschicht 2 bzw. Trägerplatte automatisiert oder manuell gefräst werden. Bei den Fräsverfahren können Fräser, insbesondere Schaftfräser, verwendet werden, welche entsprechend den Bemaßungen der Nut 3 ausgebildet sind, so dass die Nuten 3 beispielsweise in einem einzigen Fräsgang geformt werden können. Ein Vorteil der baustellenseitigen Herstellung der Nuten 3 liegt unter anderem in der besonders hohen Flexibilität hinsichtlich spontaner Änderungen oder Anpassungen des Nutverlaufs. Zur Ausbildung der Nut wird die Fräseinrichtung ausgehend von einer Stirnseite der Trägerschicht 2 oder ausgehend von einer Startvertiefung in der Trägerschicht 2 parallel zur Oberfläche 4 der Trägerschicht 2 geführt, wobei durch entsprechendes Führen der Fräseinrichtung der vorgesehene Nutverlauf erzeugt wird. Beispielsweise wird durch sägezahnartiges, wellenartiges, mäanderartiges und/oder zackenlinienartiges Führen der Fräseinrichtung ein entsprechender sägezahnartiger, wellenartiger, mäanderartiger und/oder zackenlinienartiger Nutverlauf erzeugt.

Wenn Rohre von unten in bzw. aus der Trägerschicht oder dem gesamten Bauelement geführt werden sollen, kann zur Verwirklichung der Fräser bei der Nutherstellung derart geführt werden, dass er abtaucht und gleichzeitig die Grobgeometrie, beispielsweise eine Wellenform, weiterfräst. Die dadurch gebildete Nut verhindert, dass die Temperierungsleitung auf der Oberseite der Trägerschicht bzw. des Bauelements aus der Nut aufsteigt. Als vorteilhaft erweist sich hierbei die Ausbildung einer 180°-Spirale beim Abtauchen des Fräsers.

Insbesondere aus der Beschreibung der Ausführungsbeispiele wird deutlich, dass mit dem erfindungsgemäßen Flächentemperierungsaufbau eine besonders einfache und sichere Halterung der Temperierungsleitung möglich ist. Ferner kann bei vergleichsweise geringen Herstellungskosten eine schnelle und dennoch qualitativ hochwertige Verlegung der Temperierungsleitungen erreicht werden. In vorteilhafter Weise kann insbesondere vermieden werden, dass die Temperierungsleitung beim Einbringen in die Nuten beschädigt wird.

### Bezugszeichenliste

- 1: Fußbodenheizungsaufbau
- 2: Trägerschicht
- 3: Nut
- 4: Oberfläche
- 5: Temperierungsleitung
- 6: Nutabschnitt
- 7: Nutachse
- 8: Nutboden
- 9: Seitenflanke
- 10: Nuthals
- 11: Nutöffnung
- 12: Hinterschneidung
- 13: erster Nutbereich
- 14: zweiter Nutbereich
- 15: Übergangsabschnitt

- B1: erste Öffnungsbreite
- B2: zweite Öffnungsbreite

## Patentansprüche

1. Flächentemperierungsaufbau (1), umfassend eine Trägerschicht (2) mit zumindest einer von dessen Oberfläche (4) in die Trägerschicht (2) hinein reichenden Nut (3) zur Aufnahme einer Temperierungsleitung (5), wobei die Nut (3) mehrere direkt oder über Übergangsabschnitte (15) aufeinander folgende Nutabschnitte (6) mit zueinander versetzten und/oder abgewinkelten Nutachsen (7) aufweist, und wobei zum Halten der Temperierungsleitung (5) zumindest eine Seitenflanke (9) der Nut (3) zumindest an vorgegebenen Stellen in den Nutabschnitten (6) und/oder in den Übergangsabschnitten (15) zwischen aufeinander folgenden Nutabschnitten (6) zumindest abschnittsweise als Hinterschneidung (12) ausgebildet ist, derart dass sich die Nut (3) jeweils zumindest in einem Bereich zwischen Nutboden (8) und Nutöffnung (11) zur Nutöffnung (11) hin kontinuierlich verjüngt.

2. Flächentemperierungsaufbau (1) nach Anspruch 1, wobei der Flächentemperierungsaufbau (1) Bestandteil einer Fußboden-, Wand- oder Deckentemperierung ist, insbesondere einer Fußboden-, Wand- oder Deckenheizung und/oder -kühlung.

3. Flächentemperierungsaufbau (1) nach Anspruch 1 oder 2, umfassend des Weiteren eine in die Nut (3) eingebrachte flexible Temperierungsleitung (5), wobei ein von der Temperierungsleitung (5) nicht vereinnahmtes Volumen der Nut (3) mit einem, vorzugsweise aushärtbaren, Füllmaterial verfüllt ist.

4. Flächentemperierungsaufbau (1) nach einem der Ansprüche 1 bis 3, wobei die Nutöffnung (11) eine Breite (B1) aufweist, welche größer ist als ein Durchmesser der Temperierungsleitung (5).

5. Flächentemperierungsaufbau (1) nach einem der Ansprüche 1 bis 4, wobei beide Seitenflanken (9) der Nut (3) als Hinterschneidungen (12) derart ausgebildet sind, dass sich die Nut (3) zumindest in einem Bereich zwischen Nutboden (8) und Nutöffnung (11) in Richtung vom Nutboden (8) zur Nutöffnung (11) hin beidseitig kontinuierlich verjüngt.

6. Flächentemperierungsaufbau (1) nach einem der Ansprüche 1 bis 5, wobei die Nutabschnitte (6) und Übergangsabschnitte (15) einen sägezahnartigen, wellenartigen, mäanderartigen und/oder zackenlinienartigen Nutverlauf ausbilden.

7. Flächentemperierungsaufbau (1) nach einem der Ansprüche 1 bis 6, wobei die Seitenflanken (9) der Nut (3) an denjenigen Abschnitten als Hinterschneidung (12) ausgebildet sind, an welchen ein Verlauf der jeweiligen Seitenflanke (9) bezüglich der Nutachse (7) einen negativen Krümmungsradius oder negative Krümmungsradien aufweist.

8. Flächentemperierungsaufbau (1) nach einem der Ansprüche 1 bis 7, wobei die Nut (3) in deren Längserstreckung mehrere, vorzugsweise parallel zueinander verlaufende, erste Nutbereiche (13) aufweist, in welchen jeweils mehrere Nutabschnitte (6) und Übergangsabschnitte (15) ausgebildet sind, und wobei zwei zueinander benachbarte erste Nutbereiche (13) durch, vorzugsweise gekrümmte, zweite Nutbereiche (14) verbunden sind.

9. Flächentemperierungsaufbau (1) nach einem der Ansprüche 1 bis 8, wobei die Trägerschicht (2) ein aus folgender Gruppe ausgewähltes Material umfasst: aushärtbarer Baustoff, insbesondere Beton und Estrich; Gips, insbesondere Gips-Faser-Gemische; Anhydrit; Holz, insbesondere Vollholz, Spanholz, Faserholz, Schichtholz; Kunststoff; Hartschaum.

10. Flächentemperierungsaufbau (1) nach einem der Ansprüche 1 bis 9, wobei die Trägerschicht (2) zumindest eine Trägerschichtplatte umfasst.

11. Flächentemperierungsaufbau (1) nach einem der Ansprüche 1 bis 10, wobei die Nut (3) eine maximale Tiefe von bis zu 30 mm, die Nutöffnung (11) einen maximalen Durchmesser von bis zu 25 mm und die Nut (3) im Bereich der Hinterschneidung (12) eine maximale Breite von bis zu 40 mm aufweist.

12. Flächentemperierungsaufbau (1) nach einem der Ansprüche 1 bis 11, wobei ein sich verjüngender Abschnitt der Hinterschneidung (12) mit der Öffnungsebene der Nut (3) einen Winkel von 40 Grad bis 70 Grad, vorzugsweise von etwa 55 Grad einschließt.

13. Flächentemperierungsaufbau (1) nach einem der Ansprüche 1 bis 12, wobei ein Übergang zwischen einem sich verjüngenden Abschnitt der Hinterschneidung (12) und dem Nutboden gekrümmt, vorzugsweise im Querschnitt kreisbogenförmig, ausgebildet ist.

14. Flächentemperierungsaufbau (1) nach Anspruch 13, wobei der Übergang einen Krümmungsradius von bis zu 12 mm, vorzugsweise von etwa 7 mm aufweist.

15. Bauelement, insbesondere Fertigbauelement, umfassend ein Boden-, Wand- oder Deckenbauelement mit einem Flächentemperierungsaufbau (1) nach einem der Ansprüche 1 bis 14.
